# EUROPEAN PATENT APPLICATION

(11) **EP 4 614 604 A1**
(43) Date of publication of application: **10.09.2025**
(21) Application number: 23885923.5
(22) Date of filing: 08.06.2023
(51) Int. Cl.: H01M 4/505, H01M 4/525, H01M 4/36, H01M 4/131, H01M 10/054, H01M 4/02

(54) **POSITIVE ELECTRODE ACTIVE MATERIAL FOR SODIUM SECONDARY BATTERY, METHOD FOR MANUFACTURING SAME, AND SODIUM SECONDARY BATTERY COMPRISING SAME**

(30) Priority: 31.10.2022 KR 20220143118
(71) Applicant: ECOPRO BM CO., LTD., Cheongju-si, Chungcheongbuk-do 28117 (KR)
(72) Inventor: PARK, A Ram, Cheongju-si Chungcheongbuk-do 28116 (KR); LEE, Dongwook, Cheongju-si Chungcheongbuk-do 28116 (KR); KIM, Da Mo A, Cheongju-si Chungcheongbuk-do 28116 (KR); LEE, Myeong Joo, Cheongju-si Chungcheongbuk-do 28116 (KR); JUNG, Kuhyun, Cheongju-si Chungcheongbuk-do 28116 (KR)
(74) Representative: Beck & Rössig European Patent Attorneys
(86) International application number: PCT/KR2023/007830
(87) International publication number: WO 2024/096225

(57) **Abstract**

Provided are a positive electrode active material for a sodium secondary battery including: a sodium manganese-based oxide which includes at least sodium (Na), nickel (Ni), manganese (Mn), and a doping metal (M_{D}) and has a manganese content of 55 mol% or more in all metals other than sodium, wherein the sodium manganese-based oxide is a secondary particle formed by agglomeration of at least one primary particle, and the primary particles have an aspect ratio of 1:1 to 1:2.5, a method for producing a positive electrode active material, and a positive electrode for a sodium secondary battery and a sodium secondary battery including the positive electrode active material.

## Description

### [Technical Field]

The present invention relates to a positive electrode active material for a sodium secondary battery, a method for producing the same, and a sodium secondary battery including the same.

### [Background Art]

A lithium ion secondary battery has been widely used as an energy storage device in various electronic technology fields. In recent years, as the demand of a lithium ion secondary battery rapidly increases, a sodium ion secondary battery is attracting attention for replacing lithium which is an expensive metal. Since a sodium ion secondary battery has a working principle of an insertion/desorption reaction similar to a lithium ion secondary battery, it is one of next generation materials having a high possibility of application to a secondary battery.

A transition metal oxide having a layered structure which is a representative form as a positive electrode active material has excellent electrochemical performance and is easily synthesized while having a simple structure. In particular, a high-manganese-based (high-Mn) sodium nickel manganese oxide (NNMO) predominates relatively due to the advantages such as high capacity, price competitiveness (superior reserves), and environmental friendliness, as compared with other transition metal layered oxides.

However, since the sodium ion having a large ionic radius changes its lattice structure during insertion/desorption in the layered structure, the positive electrode active material continues to cause phase transition, and due to the irreversible phase occurring during the process, the cycle life and the high capability rate of a sodium ion secondary battery are deteriorated. In particular, a high-manganese-based (high-Mn) oxide having a P2-type layered structure has a problem of deterioration of electrochemical performance such as a high capability rate and life characteristics due to an irreversible phase produced by Jahn-Teller distortion in a charging and discharging process. The Jahn-Teller distortion is a phenomenon triggered by crystal field stabilized energy, and every time the oxidation number of Mn changes (Mn3+→Mn4+), expansion and shrinkage of a lattice structure are repeated to cause deterioration of life of a positive electrode active material.

In order to solve the problem, there were attempts to improve the problems of the high manganese-based oxide through structural improvement and surface modification of particles, such as adjustment of positive electrode particle size or coating of a particle surface, but they are not at a commercial level.

### [Disclosure of Invention]

### [Technical Problem]

In order to improve a decrease in electrical conductivity due to manganese included in an excessive amount in the high-manganese-based oxide, it is preferred to produce a ternary transition metal oxide which further includes a transition metal other than manganese. However, when a co-precipitation reaction proceeds for producing a ternary transition metal hydroxide precursor, manganese oxides (such as MnO₂) are synthesized in a large amount due to high reactivity of manganese.

An object of the present invention is to provide a high-manganese ternary transition metal oxide having a uniform composition by applying a technology of performing an oxidation roasting process and a doping process of a precursor simultaneously.

Ni, high-Mn-based SIB positive electrode material of a P2-type has an advantage of showing higher energy density and capacity than a O3-type positive electrode material. However, a phase transition occurs in a voltage range of 4.0 V or more, which decreases a reversible capacity. In order to solve the problem, conventionally, a method of doping a precursor with various transition metals by a wet method is used and the transition metal is doped by a heat treatment in a post-process. However, the wet process has a limited applicable doping source and its productivity is not good due to an additional heat treatment. In order to solve the problem, in the present invention, a technology of performing doping and roasting of a precursor simultaneously by a dry method is intended to be applied.

In addition, in the present invention, primary particles in secondary particles of a positive electrode active material may grow by performing roasting and doping simultaneously under certain conditions. Thus, a positive electrode active material which has an effect of inhibiting an electrolytic solution side reaction due to a decrease in a BET specific surface area, and has improved energy density, high voltage stability, life characteristics, and high capability rate may be provided.

Still another object of the present invention is to improve reactivity with sodium by controlling crystal structures of a doping roasted precursor and a roasted positive electrode active material produced therefrom.

### [Technical Solution]

In one general aspect, a positive electrode active material for a sodium secondary battery includes: a sodium manganese-based oxide which includes at least sodium (Na), nickel (Ni), manganese (Mn), and a doping metal (M_{D}) and has a manganese content of 55 mol% or more in all metals other than sodium, wherein the sodium manganese-based oxide is a secondary particle formed by agglomeration of at least one primary particle, and the primary particles have an aspect ratio of 1:1 to 1:2.5.

The sodium manganese-based oxide has a ratio (D₂/D₁) of the secondary particles (D₂) to the primary particles (D₁) of 6 to 10.

The sodium manganese-based oxide may have an average size of the secondary particles of 8 to 15 µm, and an average size of the primary particles of 1 to 3.5 µm.

The sodium manganese-based oxide may have a BET specific surface area of 0.1 to 0.45 m²/g.

The positive electrode active material may have a c-axis length in a lattice structure of 11.13 to 11.18 (Å).

The sodium manganese-based oxide may be represented by the following Chemical Formula 1:

[Chemical Formula 1] NaₐNiₓ(M_{D})_{y}M1_{z}Mn_{1-x-y-z}O₂

wherein M_{D} is at least one selected from Fe, Co, Al, Cu, Zn, Mg, and Ti, M1 is at least one selected from P, Sr, Ba, Zn, Cu, Zr, W, Ce, Hf, Ta, Cr, F, Cr, V, Si, Y, Ga, Sn, Mo, Ge, Nd, B, Nb, and Gd, M_{D} and M1 are elements different from each other, and 0.5≤a≤0.8, 0.05≤x≤0.45, 0.01≤y≤0.15, and 0≤z≤0.05, 0.5<1-x-y-z≤0.85 are satisfied.

The doping metal (M_{D}) may be at least one selected from the group consisting of iron (Fe), cobalt (Co), aluminum (Al), copper (Cu), zinc (Zn), magnesium (Mg), and titanium (Ti).

The sodium manganese-based oxide may have a mole ratio (M_{D}/M) of the doping metal (M_{D}) to all metals other than sodium (M) of 0.01 to 0.15.

The sodium manganese-based oxide may have a mole ratio (Mn/M) of manganese (Mn) to all metals other than sodium (M) of more than 0.5 and 0.85 or less.

The sodium manganese-based oxide may have a mole ratio (Ni/M) of nickel (Ni) to all metals other than sodium (M) of 0.05 to 0.45.

The sodium manganese-based oxide may include a P2-type layered structure.

In another general aspect, a method for producing a positive electrode active material for a sodium secondary battery includes: a) dry mixing a nickel manganese hydroxide precursor containing 55 mol% or more of manganese in all metals and a doping compound and then performing roasting to produce an oxide precursor; and b) mixing the oxide precursor and a sodium compound and then performing a heat treatment to produce a sodium manganese-based oxide.

The roasting in step a) may be performed at a temperature of 750 to 1,050°C.

The doping compound may be an acetate compound, an oxide, an oxyhydroxide, a hydroxide, or a combination thereof of at least one selected from the group consisting of iron (Fe), cobalt (Co), aluminum (Al), copper (Cu), zinc (Zn), magnesium (Mg), and titanium (Ti).

The oxide precursor of step a) may include a (Ni-Mn-X)O₄ crystal structure, and X in the crystal structure may be Fe, Co, Al, Cu, Zn, Mg, or Ti.

The heat treatment of step b) may be performed at a temperature of 800 to 1,100°C.

In another general aspect, a positive electrode for a sodium secondary battery includes the positive electrode active material.

In still another general aspect, a sodium secondary battery includes the positive electrode.

### [Advantageous Effects]

In the present invention, phase transition occurring in a high voltage range of a high-manganese-based oxide may be inhibited to increase a reversible capacity. Thus, a positive electrode active material having improved energy density, high voltage stability, life characteristics, and high capability rate may be provided.

An economical effect from a simplified process and reduced process costs may be achieved in a mass production process, unlike a conventional wet process, by applying dry doping through a heat treatment. In addition, the dry doping process has an advantage of capable of selecting various doping sources, which is not easy to apply to a conventional wet process.

In general, as compared with insertion of sodium to a hydroxide precursor, in the present invention, reactivity with sodium (Na) may be improved by using an oxidized and roasted precursor.

### [Brief Description of Drawings]

FIGS. 1A, 1B, 1C, and 1D are a surface SEM photograph of a precursor, a surface SEM photograph of a roasted precursor, a surface SEM photograph of a roasting positive electrode active material, and a cross-sectional SEM photograph of a roasting positive electrode active material according to Example 1, respectively.
FIGS. 2A and 2B are a surface SEM photograph and a cross-sectional SEM photograph of a positive electrode active material according to Comparative Example 1, respectively.
FIGS. 3A and 3B are a surface SEM photograph and a cross-sectional SEM photograph of a positive electrode active material according to Comparative Example 2-1, respectively.
FIG. 4 is a surface SEM photograph of a positive electrode active material according to Comparative Example 2-2.
FIGS. 5A and 5B show results of XRD analysis of a roasting doping precursor (bulk) and a roasting positive electrode active material (bulk) produced in Example 1, respectively.
FIGS. 6A and 6B show results of cross-sectional SEM-EDS analysis of a roasting doping precursor particle and a roasting positive electrode active material particle produced in Example 1, respectively.

### [Best Mode for Carrying Out the Invention]

Advantages and features of the present invention and methods to achieve them will be elucidated from exemplary embodiments described below in detail with reference to the accompanying drawings. However, the present invention is not limited to exemplary embodiments disclosed below, but will be implemented in various forms, and the exemplary embodiments of the present invention make disclosure of the present invention thorough and are provided so that those skilled in the art can easily understand the scope of the present invention. Therefore, the present invention will be defined by the scope of the appended claims.

Unless otherwise defined herein, all terms used in the specification (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

An exemplary embodiment of the present invention provides a positive electrode active material for a sodium secondary battery. The positive electrode active material includes a sodium manganese-based oxide which includes at least sodium (Na), nickel (Ni), manganese (Mn), and a doping metal (M_{D}) and has a manganese content of 55 mol% or more in all metals other than sodium.

The sodium manganese-based oxide is an NNMO-based sodium manganese-based oxide including at least sodium, nickel, and manganese. The sodium manganese-based oxide is a high-manganese (high-Mn)-based oxide containing 55 mol% or more of manganese in all metals other than sodium, and the content of manganese in metals other than sodium may be 55 mol% or more, 60 mol% or more, or 65 mol% or more, and though the upper limit is not particularly limited, may be, for example, 85 mol% or less, 80 mol% or less, or 75 mol% or less. As the content of manganese in metals other than sodium increases, a high capacity may be exerted under a high voltage operation environment, and both nickel and cobalt concentrations may be decreased to increase price competitiveness.

The sodium manganese-based oxide of the present invention may be a secondary particle formed by agglomeration of at least one primary particle, and the primary particle may have an aspect ratio of 1:1 to 1:2.5. Specifically, the primary particles may have the aspect ratio of 1:1 to 1:2.4, 1:1 to 1:2.3, 1:1 to 1:2.2, 1:1 to 1:2.1, 1:1 to 1:2, 1:1 to 1:1.9, 1:1 to 1:1.8, 1:1 to 1:1.7, 1:1 to 1:1.6, preferably 1:1 to 1:1.5. In the present invention, roasting and doping are performed simultaneously under certain conditions, thereby increasing the size of the primary particles forming the secondary particles in the positive electrode active material and decreasing the aspect ratio to provide a positive electrode active material having improved energy density, high voltage stability, life characteristics, and high capability rate. In the present invention, a combination ratio of the doping metal dopant to all metals other than sodium is optimized so that the content of the doping metal in the primary particles is adjusted during the oxidation roasting process of the positive electrode active material precursor, dry mixing is performed so that the doping metal may be uniformly dispersed on the surface of the precursor particles, and oxidation roasting may be performed at a high temperature so that the aspect ratio range of the primary particles may be implemented.

The term "aspect ratio" used herein is a ratio (length/width ratio) between a long axis (length) and a short axis (width) of the primary particle, and when the long axis shows a direction in a longer area of the primary particle, the short axis shows a length in a shorter area positioned on the same plane as the long axis. Herein, the primary particles may have a plate shape, and means that the length in the thickness direction of the primary particles is significantly smaller than the length in the plane direction (long axis and short axis) of the primary particles. Meanwhile, the short axis may be in the direction which intersects perpendicularly to the long axis, and the "aspect ratio" of the primary particles may be calculated as a ratio between the long axis and the short axis of the primary particles measured from the surface of the primary particles.

The overall shape of the primary particles may be determined depending on the lengths of the long axis and the short axis. For example, when the aspect ratio which is a ratio between the long axis and the short axis of the primary particles is more than 2.5, the shape of the primary particles may be closer to a rod shape than a plate shape, and as the aspect ratio of the primary particles is closer to 1, the shape of the primary particles may be closer to the plate shape. Meanwhile, the primary particles may be plate-shape particles having a shape of a plane including the long axis and the short axis, which is circular, oval, polygonal, or irregular, specifically may have a disc shape.

The sodium manganese-based oxide may have a ratio (D₂/D₁) of the secondary particles (D₂) to the primary particles (D₁) of 6 to 10, preferably 6 to 9, 6 to 8, 6.5 to 8, or 6.5 to 7.5. When a primary particle size ratio (D₂/D₁) is more than 10, the size of the primary particles is in an excessively small state, and thus, the primary particles may not be made figuratively so that they do not have a P2 structure, and by-products (impurities) may be produced in a large amount. The results are due to the fact that a roasting reaction does not proceed well or the particles are not crystallized into a P2 structure, and for example, roasting at a low temperature, roasting within a short time, and/or nonuniform roasting proceeds. Meanwhile, the size of the primary particles may be the long axis length.

In addition, the sodium manganese-based oxide may have an average size of the secondary particles of 8 to 15 µm or 8 to 14 µm, and an average size of the primary particles of 1 to 3.5 µm, 1 to 3 µm, 1 to 2.5 µm, 1 to 2 µm, or 1.5 to 2 µm. The primary particles and the secondary particles included in the positive electrode active material satisfy at least the above conditions, thereby improving the particle density of the positive electrode active material. Accordingly, the electrochemical properties of the positive electrode active material may be improved.

Herein, in the present invention, 50% or more, for example, 60% or 70% or more of the total number of primary particles forming the secondary particles may have the aspect ratio in the range, the primary particle size, the ratio (D₂/D₁) of the secondary particle size to the primary particle size, in the ranges described above, or at least 10 or at least 20 primary particles of the primary particles forming the secondary particles may have the aspect ratio in the range, the primary particle size, the ratio (D₂/D₁) of the secondary particle size to the primary particle size, in the ranges described above.

The sodium manganese-based oxide may have a BET specific surface area of 0.1 to 0.45 m²/g, specifically, 0.1 to 0.4 m²/g, 0.1 to 0.35 m²/g, 0.1 to 0.3 m²/g, 0.15 to 0.3 m²/g, or 0.2 to 0.3 m²/g. In the present invention, the BET specific surface area of the sodium manganese-based oxide particles may be decreased to minimize an electrolytic solution side reaction, and simultaneously, the energy density due to an increase in the density of the positive electrode active material may be increased. In addition, since an oxidized and roasted precursor is used, reactivity with sodium during synthesis of the positive electrode active material may be improved even when the BET specific surface area is decreased, and synthesis with sodium is sufficiently performed within a short time, so that process simplification and production improvement may be promoted, and also, structural stability and chemical stability of the precursor may be improved.

The positive electrode active material may have a c-axis length in a lattice structure of 11.13 to 11.18 (Å), 11.14 to 11.18 (Å), 11.16 to 11.18 (Å), or 11.17 to 11.18 (Å). In the present invention, the c-axis length in the lattice structure may be changed in a significant range as an effect from metal doping. In the present invention, a change in the c-axis during metal doping onto the precursor may be affected by i) atomic size of the doping element, in which the atomic sizes of the doping element are different depending on the oxidation number during doping. In addition, it may also be affected by ii) a crystal structure depending on a Na equivalent (for example, P2, O3 structure) and iii) a Na content inserted into the P2 structure even at the same Na equivalent. In the present invention, doping is performed using a specific doping compound simultaneously with the roasting of a hydroxide precursor, and also, a Na insertion content is adjusted to produce a roasting positive electrode active material having a P2 type crystal structure, thereby increasing (changing) the c-axis length to the range.

Since the positive electrode active material of the present invention is produced into a precursor oxidized and roasted at a high temperature, the c-axis length in the lattice structure is increased even when the BET specific surface area is decreased, thereby improving insertion/desorption of Na.

The positive electrode active material may have a P2 type crystal structure, and thus, may be less sensitive to high atmosphere and moisture safety, and synthesis conditions (such as temperature and atmosphere).

Meanwhile, an a-axis length and a c-axis length in the lattice structure may be measured by a Rietveld refinement method based on XRD analysis, but the present invention is not limited thereto.

The sodium manganese-based oxide of the present invention may be represented by the following Chemical Formula 1:

[Chemical Formula 1] NaₐNiₓ(M_{D})_{y}M1_{z}Mn_{1-x-y-z}O₂

wherein M_{D} is at least one selected from Fe, Co, Al, Cu, Zn, Mg, and Ti, M1 is at least one selected from P, Sr, Ba, Zn, Cu, Zr, W, Ce, Hf, Ta, Cr, F, Cr, V, Si, Y, Ga, Sn, Mo, Ge, Nd, B, Nb, and Gd, M_{D} and M1 are elements different from each other, and 0.5≤a≤0.8, 0.05≤x≤0.45, 0.01≤y≤0.15, and 0≤z≤0.05, 0.5<1-x-y-z≤0.85 are satisfied.

The sodium manganese-based oxide of Chemical Formula 1 may have a mole ratio (Na/M) of sodium (Na) to all metals other than sodium (M) of 0.5 to 0.8. In Chemical Formula 1, when the content of Na corresponding to a is less than 0.5, the capacity may be lowered, and when it is more than 0.8, the position of a sodium ion changes so that a crystal structure of a O3 type may be shown, and the O3 type positive electrode active material may be more sensitive to low atmosphere and moisture stability, and synthesis conditions (such as temperature and atmosphere) than a P2 type. More preferably, Na may satisfy 0.60≤a≤0.80, 0.60≤a≤0.75, or 0.65≤a≤0.75.

The sodium manganese-based oxide may have a mole ratio (Mn/M) of manganese (Mn) to all metals other than sodium (M) of more than 0.5 and 0.85 or less. When the content range including manganese is satisfied, a high capacity may be shown under a high voltage operation environment and price competitiveness may be secured. The Mn content may be more preferably 0.5<1-x-y-z≤0.85, 0.55≤1-x-y-z≤0.80, 0.55≤1-x-y-z≤0.75, 0.55≤1-x-y-z≤0.70, 0.55≤1-x-y-z≤0.65, or 0.55≤1-x-y-z≤0.60, in Chemical Formula 1.

The manganese-based sodium composite transition metal oxide may have a mole ratio (Ni/M) of nickel (Ni) to all metals other than sodium (M) of 0.05 to 0.45. In the content range including nickel, a problem arising as the nickel content increases, that is, a problem in which the structural stability and the chemical stability of an active material are deteriorated depending on a change in a nickel oxidation number may be suppressed. The content of Ni may be more preferably 0.1≤x≤0.45, 0.2≤x≤0.45, 0.25≤x≤0.45, or 0.3≤x≤0.4 in Chemical Formula 1.

In addition, the sodium transition metal oxide may have a mole ratio (Ni/Mn) of nickel to manganese of 0.05 to 0.75, 0.1 to 0.7, 0.2 to 0.7, 0.3 to 0.6, or 0.4 to 0.6. Thus, the capacity is higher with higher Mn, but initial deterioration may occur in cell life, and it is common that the life is increased as a Ni content is increased, but since Mn is more useful in terms of price than Ni, the life characteristics may be improved by doping a heterogeneous transition metal (M_{D}) at a high ratio of a Mn content, considering the cost aspect, in a sodium ion secondary battery.

The sodium manganese-based oxide may be included by uniformly distributing the doping metal in the inside and on the surface portion of the secondary particles. When the doping metal (M_{D}) ranges from the surface portion to the center portion based on the cross section of the secondary particles, the sodium manganese-based oxide may not show a concentration gradient showing a constant tendency continuously or discontinuously, such as a continuously increasing concentration gradient, a continuously decreased concentration gradient, a continuously increased and then decreased concentration gradient, and a continuously decreased and then increased concentration gradient, in at least 50% or more of the cross-sectional area of the secondary particles. Herein, the discontinuously constant tendency may refer to particles including a coating layer formed on a core-shell or the surface thereof.

In the present invention, a technology of performing the oxidation roasting process and the doping process of a precursor simultaneously is applied, thereby uniformly distributing the doping metal in the inside and on the surface of the oxide particles, and thus, providing a ternary transition metal oxide having a uniform composition. However, in the conventional heterogeneous element doping/coating technology, the heterogeneous element is concentrically distributed on the oxide particle surface to form a coating layer, and only a part of all heterogeneous elements included in the coating layer is diffused into the oxide particles, so that a (doping metal) concentration gradient which decreases from the surface portion to the center portion of particles is easily shown. Accordingly, a heterogeneous phase, for example, an unreacted precursor such as NiO may be synthesized. Meanwhile, when a precursor is doped with a transition metal by a dry method without conventional roasting, a particle breakage phenomenon occurs in the secondary particles or the primary particles of the positive electrode active material, and it may be difficult to implement the aspect ratio of the primary particles of the present invention.

The doping metal (M_{D}) may be at least one selected from the group consisting of iron (Fe), cobalt (Co), aluminum (Al), copper (Cu), zinc (Zn), magnesium (Mg), and titanium (Ti), and preferably, may be iron (Fe), cobalt (Co), copper (Cu), zinc (Zn), or a combination thereof. Thus, the structural stability of the positive electrode active material is increased and the Jahn-Teller distortion is suppressed by producing the ternary transition metal oxide including the doping metal, and thus, the capability rate and the cycle life characteristics of a battery may be improved.

The sodium manganese-based oxide may have a mole ratio (M_{D}/M) of the doping metal (M_{D}) to all metals other than sodium (M) of 0.03 to 0.15, specifically 0.03 to 0.13, 0.03 to 0.11, 0.03 to 0.09, preferably 0.03 to 0.07. When the doping amount is more than the range, doping metal agglomeration phenomenon by overdoping may occur, and on the contrary, when the doping amount is less than the range, the doping amount is not sufficient, so that it may be difficult to secure the structural/chemical stability of the oxide.

Hereinafter, the method for producing a positive electrode active material for a sodium secondary battery of the present invention will be provided.

The production method includes: a) dry mixing a nickel manganese hydroxide precursor containing 55 mol% or more of manganese in all metals and a doping compound and then performing roasting to produce an oxide precursor; and b) mixing the oxide precursor and a sodium compound and then performing a heat treatment to produce a sodium manganese-based oxide.

a) is a step of dry mixing a nickel manganese hydroxide precursor and a doping compound and then performing roasting, in order to produce a doping oxide precursor. Conventionally, when the hydroxide precursor is doped with the transition metal by a dry method without roasting, a particle breakage phenomenon may occur in the secondary particles or the primary particles of the oxide, after the heat treatment for sodium insertion in the post-process. The phenomenon is analyzed as resulting from an organic element or oxide such as acetate or an oxygen element such as oxides, oxyhydroxides, or hydroxides, among the anion groups included in the doping compound. In addition, when the transition metal is doped by a wet method, selection of the doping compound is limited, and costs are increased by process complication.

The roasting may be performed at a temperature of 750 to 1,050°C, preferably 800 to 1,050°C, 800 to 950°C, 850 to 1,000°C, or 850 to 950°C, under an oxidation atmosphere. When the roasting is performed at a higher temperature than the range, the size of the synthesized roasted precursor primary particles is excessively increased, so that the Na ion diffusion on the surface of the particles may be limited. On the contrary, when the roasting is performed at a lower temperature than the range, the primary particles do not sufficiently grow, so that it may be difficult to implement the primary particle aspect ratio to be desired. Herein, though the roasting time is not particularly limited, it may be preferably 6 to 15 hours, 8 to 15 hours, or 8 to 13 hours.

The nickel manganese hydroxide precursor may be represented by the following Chemical Formula 2:

[Chemical Formula 2] NiₓMn₁₋ₓ(OH)₂

wherein 0.05≤x≤0.45 and 0.55≤1-x≤0.95 are satisfied.

The nickel manganese hydroxide precursor may have a mole ratio (Mn/M) of manganese (Mn) to all metals (M) of 0.55 to 0.85. When the content range including manganese is satisfied, a high capacity may be shown under a high voltage operation environment and price competitiveness may be secured. The Mn content may be more preferably 0.60≤1-x≤0.85, 0.60≤1-x≤0.80, or 0.60≤1-x≤0.70 in Chemical Formula 2.

The nickel manganese hydroxide precursor may have a mole ratio (Ni/M) of nickel (Ni) to all metals (M) of 0.05 to 0.45. In the content range including nickel, a problem in which the structural stability and the chemical stability of an active material are deteriorated depending on a change in a nickel oxidation number, which arises as the nickel content increases, may be improved. The content of Ni may be more preferably 0.1≤x≤0.45, 0.2≤x≤0.45, 0.25≤x≤0.45, or 0.3≤x≤0.4 in Chemical Formula 2.

The doping compound may be at least one of an acetate compound, an oxide, an oxyhydroxide, a hydroxide, or a combination thereof of at least one selected from the group consisting of iron (Fe), cobalt (Co), aluminum (Al), copper (Cu), zinc (Zn), magnesium (Mg), and titanium (Ti), at least one hydroxide selected from the group consisting of iron (Fe), cobalt (Co), aluminum (Al), copper (Cu), zinc (Zn), magnesium (Mg), and titanium (Ti), and specifically, may be at least one selected from the group consisting of Co(OH)₂, Fe(CH₃COO)₂, Co(CH₃COO)₂, ZnO, and CuO, and for example, Co(OH)₂.

The doping positive electrode active material of the present invention may have an increased c-axis length in the lattice structure as a doping effect, and the increase in the c-axis length may improve the insertion/desorption of Na. In the present invention, when the doping compound is a hydroxide of cobalt (Co) and/or copper (Cu), an oxide of cobalt (Co) and/or copper (Cu), or an oxyhydroxide of cobalt (Co) and/or copper (Cu), it may be preferred in terms of an increase in the c-axis length in the lattice structure.

When the doping and the roasting of the precursor are simultaneously performed by the dry method, the specific surface area and the porosity of the roasted precursor are decreased, the particle size of multiple primary particles in the secondary particles is increased, and the agglomeration degree is increased. Thus, the tap density of the roasted precursor is increased, and a particle breakage problem which arises when dry doping is performed without roasting may be prevented.

The oxide precursor of step a) may include a (Ni-Mn-X)O₄ crystal structure, in which X may be at least one selected from the group consisting of iron (Fe), cobalt (Co), aluminum (Al), copper (Cu), zinc (Zn), magnesium (Mg), and titanium (Ti).

b) is a step of mixing the oxide precursor and a sodium compound and then performing a heat treatment in order to produce a sodium manganese-based oxide.

The mixing of the oxide precursor and the sodium compound may be performed so that a mole ratio of the transition metal of the precursor: sodium is 1:0.5 to 1:0.8, 1:0.6 to 1:0.8, 1:0.6 to 1:0.75, or 1:0.65 to 1:0.75. When the mixing amount of the sodium compound is within the range, the crystal structure of the produced positive electrode active material may be a P2 type layered structure, and thus, may be less sensitive to high atmospheric and moisture safety and synthesis conditions (such as temperature and atmosphere). In addition, a battery discharge capacity may be improved in the sodium content range, and Na which does not react and remains may be minimized.

The heat treatment may be performed at a temperature of 700°C to 1,100°C. When a firing temperature is within the range, a reaction between raw materials may sufficiently occur and particles may uniformly grow. The heat treatment may be performed more preferably at a temperature of 750 to 1,050°C, 850 to 1,050°C, or 900 to 1,000°C. The heat treatment may be performed for 5 hours to 40 hours. When a firing time is within the range, a highly crystalline positive electrode active material may be obtained, the size of the particles is appropriate, and production efficiency may be improved. The heat treatment may be performed more preferably for 5 to 20 hours, 5 to 18 hours, 8 to 15 hours, or 10 to 14 hours.

The sodium compound may be at least one selected from the group consisting of Na₂CO₃, NaOH, NaNO₃, CH₃COONa, and Na₂(COO)₂, and preferably, may be Na₂CO₃, NaOH, or a combination thereof.

The production method of the present invention may further include a water washing process and a drying process after step b). The water washing process is a process for removing an unreacted material, impurities, and residual sodium, and may be feeding the positive electrode active material produced in step b) to a reactor to which one or more selected from deionzed water, distilled water, and ethanol is fed, and performing water washing at a temperature of 1 to 80°C or 5 to 50°C at a stirring speed of 200 to 500 rpm, 200 to 400 rpm, or 300 to 400 rpm for 0.5 to 5 hours, 0.5 to 4 hours, 0.5 to 3 hours, or 0.5 to 1.5 hours. The drying process is a process for removing moisture from the positive electrode active material including moisture through the water washing, and may be drying at a temperature of 100 to 300°C for 12 hours under vacuum conditions.

Another exemplary embodiment of the present invention provides a positive electrode for a sodium secondary battery and a sodium secondary battery including the positive electrode active material.

The positive electrode includes a positive electrode active material layer positioned on a positive electrode current collector, and the positive electrode active material according to an aspect of the present invention is present on a positive electrode active material layer.

The positive electrode current collector is not particularly limited as long as it has a conductivity without causing a chemical change in a battery, and for example, stainless steel, aluminum, nickel, titanium, baked carbon, or aluminum or stainless steel which is surface-treated with carbon, nickel, titanium, silver, or the like, and the like may be used. In addition, the positive electrode current collector may have a thickness of usually 3 to 500 µm, and fine unevenness may be formed on the surface of the current collector to increase adhesive strength to the positive electrode active material. The positive electrode current collector may be provided in various forms such as a film, a sheet, a foil, a net, a porous body, foam, and a nonwoven fabric body.

In addition, the positive electrode active material layer may be a layer including a conductive material and a binder with the positive electrode active material described above.

Herein, the conductive material is used for imparting conductivity to an electrode and may be used without particular limitation as long as it has a conductivity without causing a chemical change in a positive electrode active material. A non-limiting example of the conductive material may include graphites such as natural graphite or artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whisker such as zinc oxide and potassium titanate; conductive metal oxides such as titanium oxide; conductive polymers such as a polyphenylene derivative, or the like. The conductive material may be usually included at 1 wt% to 30 wt% based on the total weight of the positive electrode active material layer.

In addition, the binder may serve to improve adhesion between positive electrode active material particles and adhesive strength between the positive electrode active material and the current collector. A non-limiting example of the binder may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), sulfonated-EPDM, styrene-butadiene rubber (SBR), fluorine rubber, various copolymers thereof, or the like. The binder may be included at 1 wt% to 30 wt%, based on the total weight of the positive electrode active material layer.

The positive electrode according to an exemplary embodiment of the present invention may be produced according to a common method for producing a positive electrode for a sodium secondary battery, except for using the positive electrode active material described above. For example, the positive electrode active material, and selectively, a slurry for forming a positive electrode active material layer including the binder and the conductive material are applied on a positive electrode current collector, and drying and rolling are performed to produce a positive electrode. According to another exemplary embodiment, the slurry for a positive electrode active material layer is cast on a separate support and a positive electrode active material layer is peeled off from the support to obtain a film, which is laminated on the positive electrode current collector, thereby producing the positive electrode.

According to another aspect of the present invention, an electrochemical device including the positive electrode is provided. Herein, the electrochemical device may be, specifically, a battery, a capacitor, and the like, and more specifically, a sodium secondary battery.

The sodium secondary battery includes a positive electrode, a negative electrode placed to face the positive electrode, a separator interposed between the positive electrode and the negative electrode, and an electrolyte (electrolytic solution). In addition, the sodium secondary battery may include a battery container (case) which stores an electrode assembly including the positive electrode, the negative electrode, and the separator, and a sealing member for sealing the battery container.

Herein, the sodium secondary battery may be classified into a can-type sodium secondary battery in which the electrode assembly is built into a metal can and a pouch-type sodium secondary battery in which the electrode assembly is built into a pouch formed of a sheet such as an aluminum laminate, depending on the shape of the battery container (case).

In particular, in the case of the pouch type sodium secondary battery using the positive electrode including the positive electrode active material according to various exemplary embodiments of the present invention, a possibility of causing a side reaction between the positive electrode active material and the electrolytic solution is low, and thus, stability during storage and/or operation is improved and also gassing is reduced.

Hereinafter, the present invention will be described in detail by the examples, however, the examples are for describing the present invention in more detail, and the scope of the present invention is not limited to the following examples.

### Examples

### Production Example 1: Production of positive electrode active material

### (Example 1)

### Step 1) Doping and production of roasted precursor

A Ni_{0.35}Mn_{0.65}(OH)₂ high-manganese-based precursor and Co(OH)₂ were mixed at a mole ratio of (Ni:Mn:Co = 31.5:58.5:10) using a hand mixer, and the mixed product was fed to an alumina crucible, oxidized and roasted at 950°C for 12 hours in an air atmosphere, and cooled to room temperature to produce a roasted precursor (Ni-Mn-Co)O₄.

### Step 2) Production of positive electrode active material

The produced roasted precursor and a sodium compound Na₂CO₃ were mixed at an equivalent of Na/(Ni+Mn+Fe) = 0.67 to obtain a mixture. The produced mixture was fed to an alumina crucible, fired at 950°C for 12 hours in an O₂ atmosphere, and cooled to room temperature to produce a P2-type Na_{0.67}Ni_{0.315}Co_{0.1}Mn_{0.585}O₂ positive electrode active material for a sodium secondary battery.

### (Examples 2-1 and 2-2)

Roasted precursors and positive electrode active materials were produced in the same manner as in Example 1, except that the oxidizing and roasting temperature in step 1) were changed to 800°C (Example 2-1) and 900°C (Example 2-2), respectively.

### (Examples 3-1 to 3-4)

Roasted precursors (Ni-Mn-X-O₄) and positive electrode active materials (Na_{0.67}Ni_{0.315}X_{0.1}Mn_{0.585}O₂) were produced in the same manner as in Example 1, except that the doping source (Co(OH)₂) in step 1) was changed to Fe(CH₃COO)₂, Co(CH₃COO)₂, ZnO, and CuO, respectively,
wherein X = Fe, Co, Zn, or Cu.

### (Comparative Example 1)

A Na_{0.67}Ni_{0.35}Mn_{0.65}O₂ positive electrode active material for a sodium secondary battery was produced in the same manner as in Example 1, except that step 1) was not performed, and a Ni_{0.35}Mn_{0.65}(OH)₂ high-manganese-based precursor was used in step 2).

### (Comparative Example 2-1)

A positive electrode active material was produced in the same manner as in Example 1 and step 2), except that the coating precursor produced in step 1) was used as described below.

### Step 1) Production of precursor

400 g of DIW was fed to a batch type 5 L reactor, 23.9 g of a 1 M NaOH solution was fed, and then stirring was maintained at a temperature of 25°C for 15 minutes at a stirring speed of 300 rpm so that pH was 12.8. Ni_{0.35}Mn_{0.65}(OH)₂ high-manganese-based precursor powder was added and stirred at 300 rpm.

Thereafter, a cobalt sulfate (CoSO₄) aqueous solution having a concentration of 1.7 M was reacted for 60 minutes while maintaining pH 11.5 to 12 by adjusting the feeding amount at a speed of 51.18 ml/hr, thereby forming a cobalt hydroxide (Co(OH)₂) on the surface of the high-manganese-based precursor particles. The formed particles were separated and dried for 24 hours in a vacuum oven at 110°C to produce a precursor.

### (Comparative Example 2-2)

A Ni_{0.35}Mn_{0.65}(OH)₂ high-manganese-based precursor, Fe(OH)₂, and a sodium compound Na₂CO₃ were mixed at an equivalent of Na/(Ni+Mn+Fe) = 0.67 to obtain a mixture. The produced mixture was fed to an alumina crucible, oxidized and roasted at 950°C for 12 hours in an air atmosphere, and cooled to room temperature to produce a P2-type Na_{0.67}Ni_{0.315}Fe_{0.1}Mn_{0.585}O₂ positive electrode active material for a sodium secondary battery.

### (Comparative Example 3)

### Step 1) Production of roasted precursor

A Ni_{0.35}Mn_{0.65}(OH)₂ high-manganese-based precursor was fed to an alumina crucible, oxidized and roasted at 600°C for 12 hours in an air atmosphere, and cooled to room temperature to produce a roasted precursor (Ni-Mn₂)O₄.

### Step 2) Production of positive electrode active material

The produced roasted precursor and a sodium compound Na₂CO₃ were mixed at an equivalent of Na/(Ni+Mn) = 0.67 to obtain a mixture. The produced mixture was fed to an alumina crucible, fired at 950°C for 12 hours in an O₂ atmosphere, and cooled to room temperature to produce a P2-type Na_{0.67}Ni_{0.35}Mn_{0.65}O₂ positive electrode active material for a sodium secondary battery.

### (Reference Example)

### Step 1) Production of roasted precursor

A Ni_{0.35}Mn_{0.65}(OH)₂ high-manganese-based precursor was fed to an alumina crucible, oxidized and roasted at 950°C for 12 hours in an air atmosphere, and cooled to room temperature to produce a roasted precursor (Ni-Mn₂)O₄.

### Step 2) Production of positive electrode active material

The produced roasted precursor and a sodium compound Na₂CO₃ were mixed at an equivalent of Na/(Ni+Mn) = 0.67 to obtain a mixture. The produced mixture was fed to an alumina crucible, fired at 950°C for 12 hours in an O₂ atmosphere, and cooled to room temperature to produce a P2-type Na_{0.67}Ni_{0.35}Mn_{0.65}O₂ positive electrode active material for a sodium secondary battery.

### Production Example 2: Production of secondary battery

85 wt% of the produced positive electrode active material, 10 wt% of carbon black, and 5 wt% of a PVdF binder were dispersed in 30 g of N-methyl-2 pyrrolidone (NMP) to produce a positive electrode slurry. The positive electrode slurry was uniformly applied on an aluminum thin film having a thickness of 15 µm, and dried under vacuum at 135°C to produce a positive electrode for a sodium secondary battery.

For the positive electrode, a sodium metal plate was used as a counter electrode, a porous glass fiber ( thickness: 200 µm) was used as a separator, and an electrolytic solution in which NaPF₆ was present at a concentration of 1.0 M in a mixed solvent of propylene carbonate and fluoroethylene carbonate at a volume ratio of 98:2 was used to produce a sodium secondary battery (coin battery).

### Experimental Examples

### Experimental Example 1: SEM analysis of surface and cross-sectional shape of positive electrode active material particles

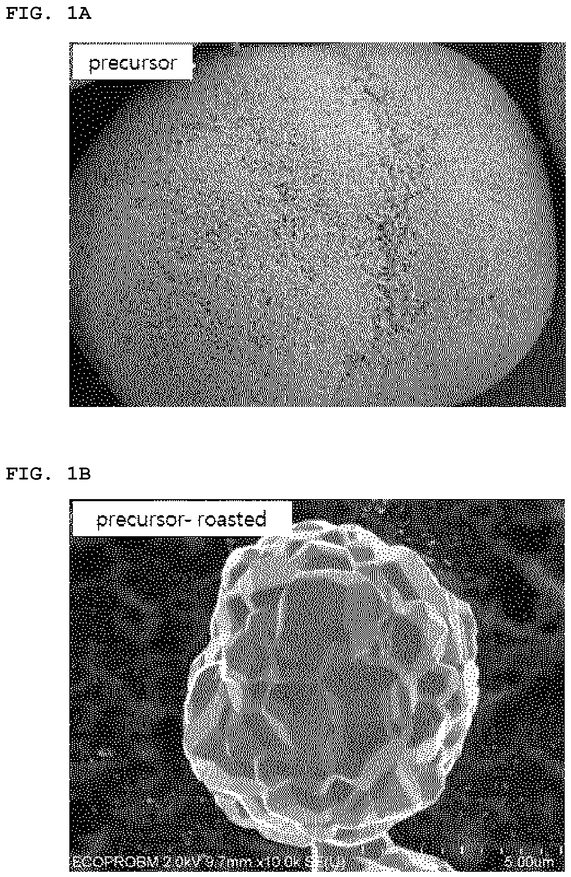

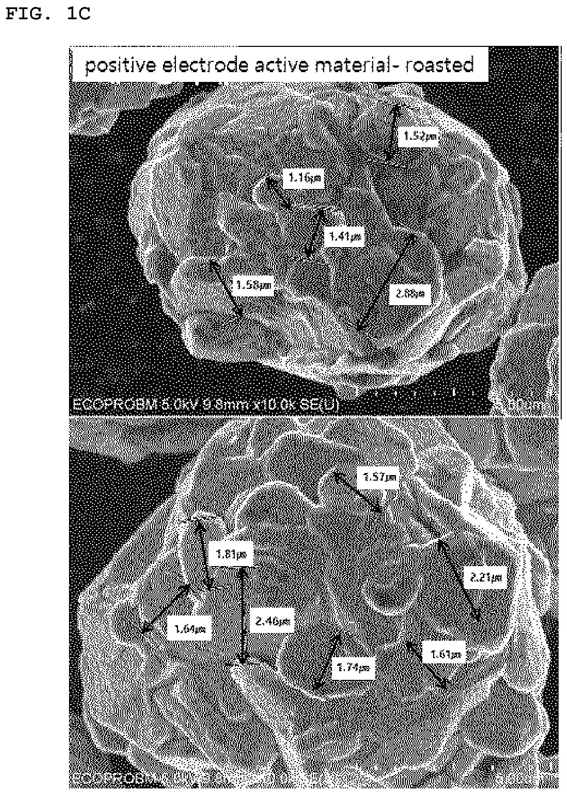

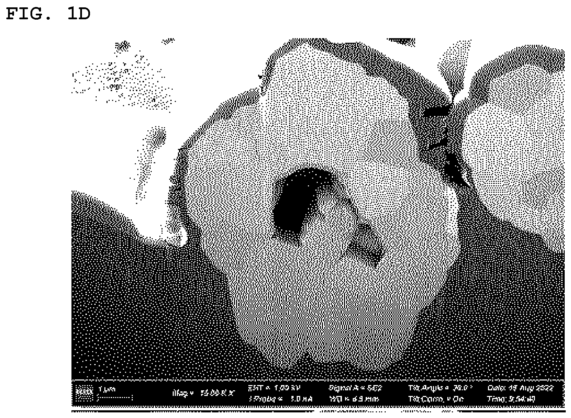

FIGS. 1A, 1B, 1C, and 1D are a surface SEM photograph of a precursor, a surface SEM photograph of a roasted precursor, a surface SEM photograph of a roasting positive electrode active material, and a cross-sectional SEM photograph of a roasting positive electrode active material according to Example 1, respectively.

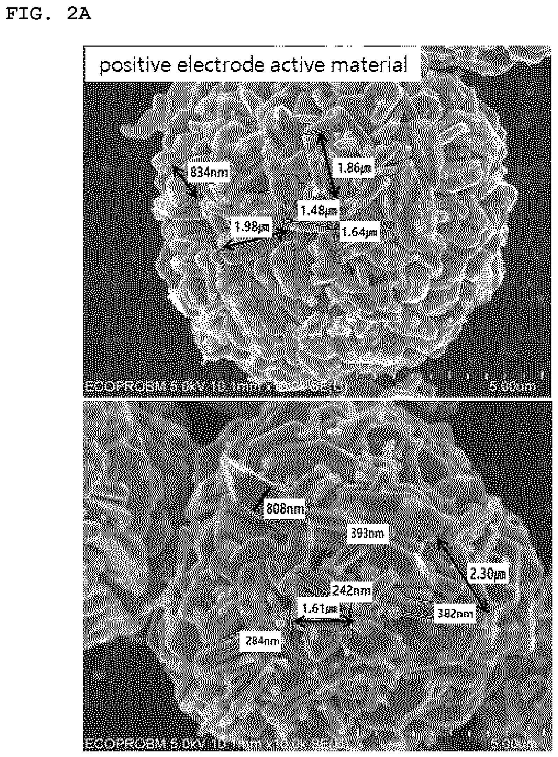

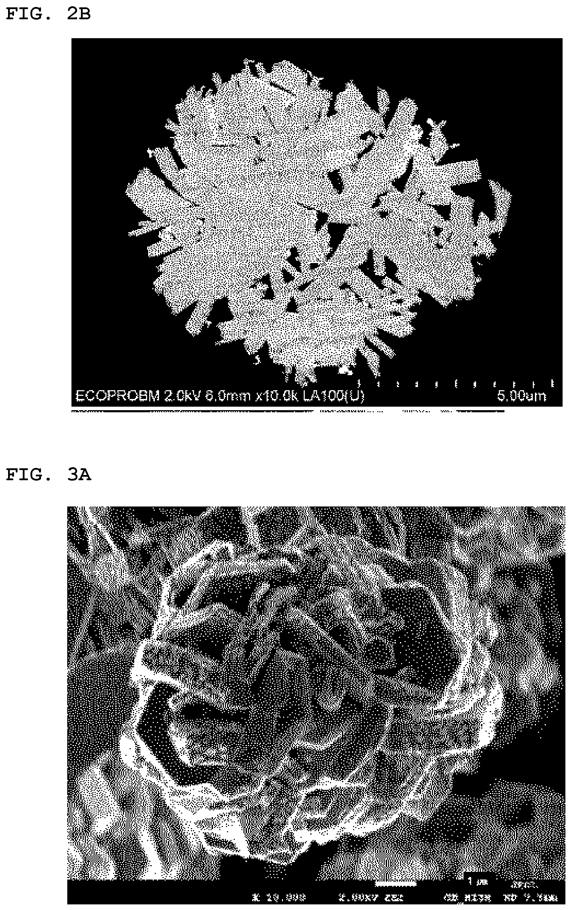

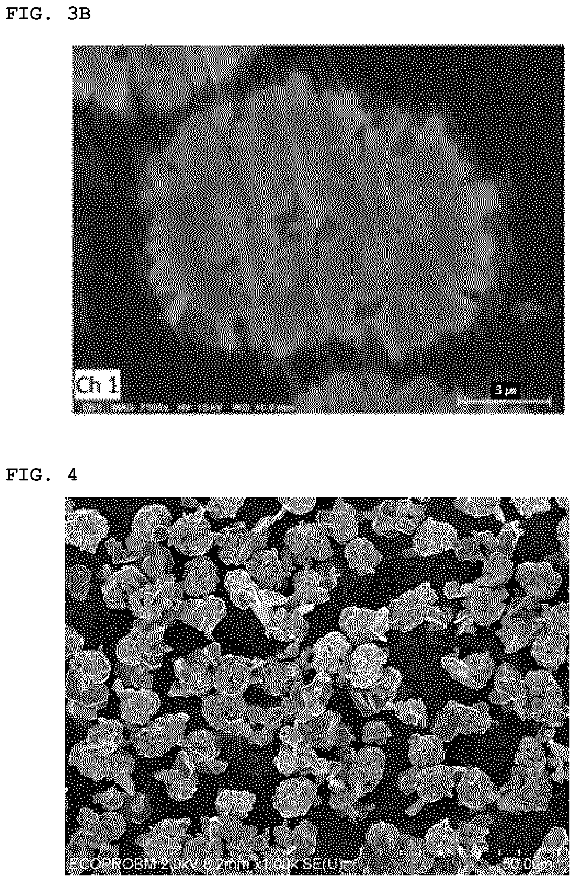

FIGS. 2A and 2B are a surface SEM photograph and a cross-sectional SEM photograph of the positive electrode active material according to Comparative Example 1, and FIGS. 3A and 3B are a surface SEM photograph and a cross-sectional SEM photograph of the positive electrode active material according to Comparative Example 2-1. FIG. 4 is a surface SEM photograph of a positive electrode active material according to Comparative Example 2-2.

The following Table 1 summarizes particle shapes measured from the surface and cross-sectional SEM photographs of the positive electrode active material particles. A primary particle average aspect ratio and a primary particle diameter (D1) are average values measured by selecting at least 20 primary particles. The particle diameter of secondary particles was confirmed from the SEM photograph and particle size analysis (PSA).

Meanwhile, the cross-sectional SEM photograph was measured after treating the cross section of the secondary particles with a cross-section polisher (acceleration voltage: 5.0 kV, milling for 4 hours).

**[Table 1]**

| | Roasting temperature (°C) | Doping conditions (M_{D}/mol%) | Average aspect ratio of primary particles | Primary particle diameter (D1, µm) | Secondary particle diameter (D2, µm) | Particle diameter ratio (D2/D1) |
|---|---|---|---|---|---|---|
| Example 1 | 950 | Co / 10 | 1.1 | 1.7 | 12 | 7.06 |
| Example 2-2 | 900 | Co / 10 | 1.3 | 1.56 | 12 | 7.69 |
| Example 3-1 | 950 | Fe / 10 | 1.5 | 1.8 | 12 | 6.67 |
| Example 3-2 | 950 | Zn / 10 | 1.1 | 1.6 | 12 | 7.50 |
| Example 3-3 | 950 | Cu / 10 | 1.3 | 1.7 | 12 | 7.06 |
| Example 3-4 | 950 | Co / 10 | 1.2 | 1.7 | 12 | 7.06 |
| Comparativ e Example 1 | - | - | 8 | 2.0 | 10 | 5.56 |
| Comparativ e Example 2-1 | - | Co / 10 | 2.8 | 1.9 | 10 | 5.26 |
| Comparativ e Example 2-2 | - | Fe / 10 | Immeasur able | Immeasur able | Immeasur able | Immeasur able |
| Comparativ e Example 3 | 600 | - | 3.2 | 2.1 | 10 | 4.76 |
| Reference Example | 950 | - | 1.2 | 1.7 | 12 | 7.06 |

Referring to Table 1, in the positive electrode active material secondary particles according to the examples, since the hydroxide precursor was roasted with the doping metal, it was confirmed that the particle diameter of the positive electrode active material primary particles was increased overall. Accordingly, since the aspect ratio of the primary particles was close to 1:1 and the crystal density of the primary particles was high, crystal structure stability was excellent, and stability was expected to be improved, for example, energy density was improved and phase transition during operation at high voltage was inhibited.

However, the positive electrode active materials according to Comparative Examples 1 and 2-1 had primary particles having a rod shape and a plate shape, respectively, had uneven primary particle sizes, and had the aspect ratio and the particle diameter ratio (D2/D1) more than the numerical range of the present invention. In Comparative Example 3, since roasting was performed at somewhat a low temperature, primary particles did not grow sufficiently. Meanwhile, in the positive electrode active material according to Comparative Example 2-2, particle breakage occurred by dry doping, and the sizes of the primary particles and secondary particles and the like were not able to be measured.

### Experimental Example 2: XRD analysis of positive electrode active material particle crystal structure

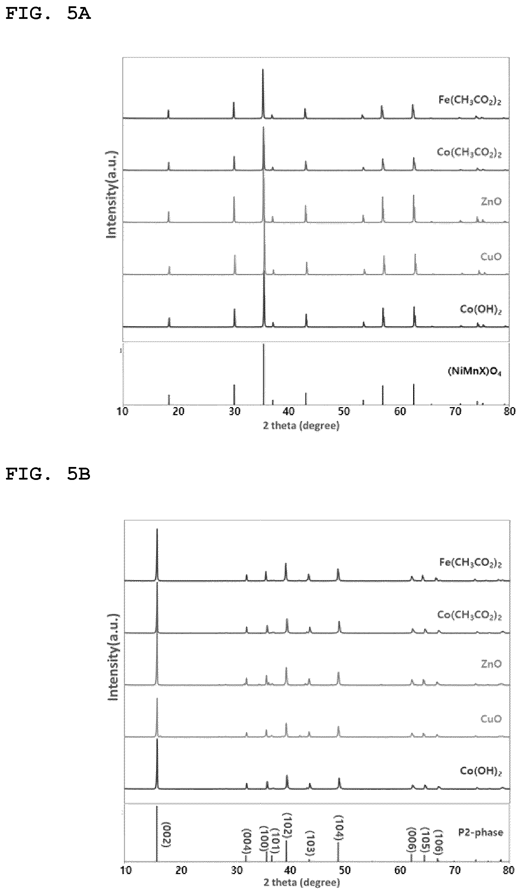

FIGS. 5A and 5B show results of XRD analysis of a roasting doping precursor (bulk) and a roasting positive electrode active material (bulk) produced in Example 1, respectively. It was confirmed that roasted precursor produced in Example 1 all had the structure of (Ni-Mn-X)O₄ regardless of the doping source. In addition, it was found that in the roasted positive electrode active material, the Na layer (002) plane in the crystal structure grew up elaborately and the P2 structure was formed well.

The following Table 2 summarizes the c-axis lengths in the lattice structures measured by a Rietveld refinement method based on XRD analysis for the roasted positive electrode active materials produced in Examples 1 and 3-1 to 3-4, Comparative Example 1, and Reference Example.

**[Table 2]**

| | Doping source | c-axis length (Å) of roasted positive electrode active material |
|---|---|---|
| Example 1 | Co (OH)₂ | 11.1766 |
| Example 3-1 | Fe(CH₃COO)₂ | 11.1301 |
| Example 3-2 | ZnO | 11.1422 |
| Example 3-3 | CuO | 11.1315 |
| Example 3-4 | Co(CH₃COO)₂ | 11.1456 |
| Reference Example | - | 11.1415 |

The roasted precursor had a structure in which the axis lengths in the lattice structure were all the same with a-axis=b-axis=c-axis, and as the effect by metal doping in the present invention, a change in the a-axis length in the lattice structure did not occur and a significant change in the c-axis length was analyzed.

In Example 1, doping was performed using Co(OH)₂, and it was analyzed that metal ordering occurred most frequently during doping. Upon comparison of the results of Example 1 and Example 3-4, though the same Co source was used as a doping metal, the doping effect was better when Co(OH)₂ was used than when Co(CH₃COO)₂ was used.

Upon comparison of Example 3-1 and Example 3-4, a Co source had a better doping effect than a Fe source as the doping metal, and upon comparison of Example 3-2 and Example 3-3, a Zn source had a better doping effect than a Cu source as the doping metal.

### Experimental Example 3: Confirmation of doping metal distribution uniformity inside particles through SEM and EDS analysis

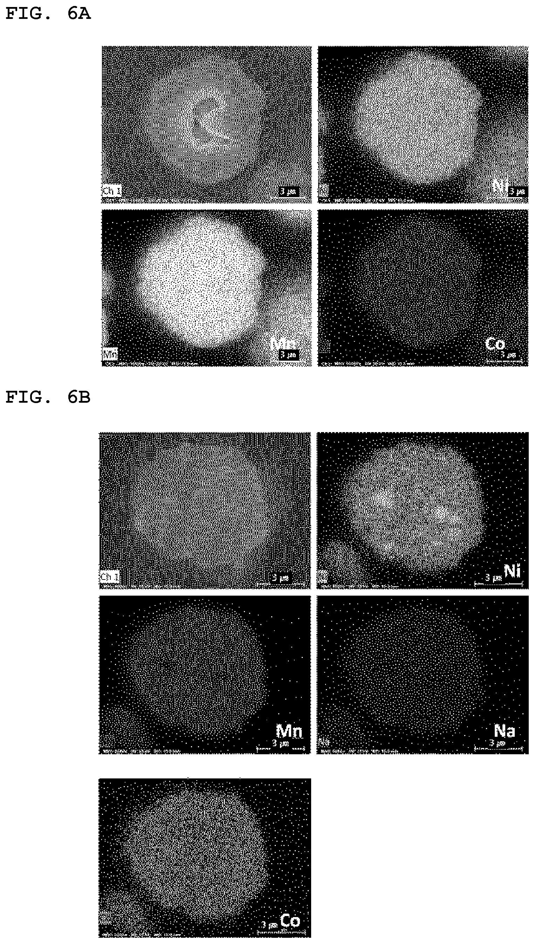

FIGS. 6A and 6B show results of cross-sectional SEM-EDS analysis of a roasting doping precursor particle and a roasting positive electrode active material particle produced in Example 1, respectively.

The Co-doped roasted precursor and roasted positive electrode active material produced in Example 1 were confirmed to have uniform Co doping inside the secondary particles, and it was confirmed that a transition metal ternary roasted precursor (oxide) having a uniform composition and a positive electrode active material were able to be produced through the roasting doping technology of the present invention.

### Experimental Example 4: Analysis of electrochemical performance of sodium secondary battery

For the sodium secondary batteries (coin cells) produced in Example 1 and Comparative Examples 1, 2-1, and 3, a charge and discharge experiment to which 25°C, a voltage range of 2.2 V to 4.4 V, and a discharge rate of 0.1 C to 5.0 C were applied, using an electrochemical analyzer (Toyo, Toscat-3100) was performed to measure a capability rate (discharge capacity rate; rate capability (C-rate)), and the results are shown in the following Table 3.

In addition, for the same sodium secondary battery, charging and discharging were performed 50 times under the conditions of 0.5 C/0.5 C within an operation voltage range of 2.2 V to 4.4 V at 25°C, and then a rate of discharge capacity at 50th cycle to an initial capacity (cycle capacity retention rate) was measured, and the results are shown in the following Table 3.

**[Table 3]**

| | BET specific surface area (m²/g) | Cycle life (25°C, 50 cy) (%) | Capability rate (25°C, 5 C/0.1 C) (%) |
|---|---|---|---|
| Example 1 | 0.26 | 66 | 61 |
| Comparative Example 1 | 0.52 | 55 | 51 |
| Comparative Example 2-1 | 0.50 | 56 | 51 |
| Comparative Example 3 | 1.21 | 56 | 53 |

Referring to Table 3, in the sodium secondary battery according to Table 1, it was confirmed that phase transition occurring in a high voltage range was suppressed by morphological specificity of the primary particles and uniform metal doping in the secondary particles of the positive electrode active material, so that high voltage stability was improved and energy density was improved to greatly improve cell performance.

As described above, although the present invention has been shown and described with respect to specific exemplary embodiments, it will be obvious to those skilled in the art that the present invention may be variously modified and altered without departing from the spirit and scope of the present invention as defined by the following claims.

## Claims

1. A positive electrode active material for a sodium secondary battery comprising: a sodium manganese-based oxide which includes at least sodium (Na), nickel (Ni), manganese (Mn), and a doping metal (MD) and has a manganese content of 55 mol% or more in all metals other than sodium,
wherein the sodium manganese-based oxide is a secondary particle formed by agglomeration of at least one primary particle, and the primary particles have an aspect ratio of 1:1 to 1:2.5.

2. The positive electrode active material for a sodium secondary battery of claim 1, wherein the sodium manganese-based oxide has a ratio (D₂/D₁) of the secondary particles (D₂) to the primary particles (D₁) of 6 to 10.

3. The positive electrode active material for a sodium secondary battery of claim 1, wherein the sodium manganese-based oxide has an average size of the secondary particles of 8 to 15 µm, and an average size of the primary particles is 1 to 3.5 µm.

4. The positive electrode active material for a sodium secondary battery of claim 1, wherein the sodium manganese-based oxide has a BET specific surface area of 0.1 to 0.45 m²/g.

5. The positive electrode active material for a sodium secondary battery of claim 1, wherein the positive electrode active material has a c-axis length in a lattice structure of 11.13 to 11.18 (Å).

6. The positive electrode active material for a sodium secondary battery of claim 1, wherein the sodium manganese-based oxide is represented by the following Chemical Formula 1:
[Chemical Formula 1] NaₐNiₓ(M_{D})_{y}M1_{z}Mn_{1-x-y-z}O₂
wherein M_{D} is at least one selected from Fe, Co, Al, Cu, Zn, Mg, and Ti,
M1 is at least one selected from P, Sr, Ba, Zn, Cu, Zr, W, Ce, Hf, Ta, Cr, F, Cr, V, Si, Y, Ga, Sn, Mo, Ge, Nd, B, Nb, and Gd,
M_{D} and M1 are elements different from each other, and
0.5≤a≤0.8, 0.05≤x≤0.45, 0.01≤y≤0.15, 0≤z≤0.05, and 0.5<1-x-y-z≤0.85 are satisfied.

7. The positive electrode active material for a sodium secondary battery of claim 1, wherein the doping metal (M_{D}) is at least one selected from the group consisting of iron (Fe), cobalt (Co), aluminum (Al), copper (Cu), zinc (Zn), magnesium (Mg), and titanium (Ti).

8. The positive electrode active material for a sodium secondary battery of claim 1, wherein the sodium manganese-based oxide has a mole ratio (M_{D}/M) of the doping metal (M_{D}) to all metals other than sodium (M) of 0.01 to 0.15.

9. The positive electrode active material for a sodium secondary battery of claim 1, wherein the sodium manganese-based oxide has a mole ratio (Mn/M) of manganese (Mn) to all metals other than sodium (M) of more than 0.5 and 0.85 or less.

10. The positive electrode active material for a sodium secondary battery of claim 1, wherein the sodium manganese-based oxide has a mole ratio (Ni/M) of nickel (Ni) to all metals other than sodium (M) of 0.05 to 0.45.

11. The positive electrode active material for a sodium secondary battery of claim 1, wherein the sodium manganese-based oxide includes a P2-type layered structure.

12. A method for producing a positive electrode active material for a sodium secondary battery, the method comprising:
a) dry mixing a nickel manganese hydroxide precursor containing 55 mol% or more of manganese in all metals and a doping compound and then performing roasting to produce an oxide precursor; and
b) mixing the oxide precursor and a sodium compound and then performing a heat treatment to produce a sodium manganese-based oxide.

13. The method for producing a positive electrode active material for a sodium secondary battery of claim 12, wherein the roasting of a) is performed at a temperature of 750 to 1,050°C.

14. The method for producing a positive electrode active material for a sodium secondary battery of claim 12, wherein the doping compound is an acetate compound, an oxide, an oxyhydroxide, a hydroxide, or a combination thereof of at least one selected from the group consisting of iron (Fe), cobalt (Co), aluminum (Al), copper (Cu), zinc (Zn), magnesium (Mg), and titanium (Ti).

15. The method for producing a positive electrode active material for a sodium secondary battery of claim 12, wherein the oxide precursor of a) includes a (Ni-Mn-X)O₄ crystal structure, and
X in the crystal structure is Fe, Co, Al, Cu, Zn, Mg, or Ti.

16. The method for producing a positive electrode active material for a sodium secondary battery of claim 12, wherein the heat treatment of b) is performed at a temperature of 800 to 1,100°C.

17. A positive electrode for a sodium secondary battery comprising the positive electrode active material of claim 1.

18. A sodium secondary battery comprising the positive electrode of claim 17.
